# EUROPEAN PATENT SPECIFICATION

(11) **EP 0 345 037 B1**
(45) Date of publication and mention of the grant of the patent: **02.11.1994**
(21) Application number: 89305473.4
(22) Date of filing: 31.05.1989
(51) Int. Cl.: G11B 20/10, G11B 20/14, G11B 5/024, G11B 27/036, G11B 5/09, G11B 5/008

(54) **A digital signal recording apparatus**
Gerät zur Aufnahme von digitalen Signalen
Appareil d'enregistrement de signaux digitaux

(30) Priority: 31.05.1988 JP 133922/88
(43) Date of publication of application: 06.12.1989
(73) Proprietor: SONY CORPORATION, Tokyo 141 (JP)
(72) Inventor: Eguchi, Takeo, Shinagawa-ku Tokyo (JP)
(74) Representative: Ayers, Martyn Lewis Stanley

(56) References cited:
- EP-A- 0 185 764
- FR-A- 2 322 484
- US-A- 4 779 146
- PATENT ABSTRACTS OF JAPAN vol. 8, no. 133 (P-281)(1570) 20 June 1984, & JP-A-59 036312 (SONY K.K.) 28 February 1984,
- PATENT ABSTRACTS OF JAPAN vol. 9, no. 217 (P-385) 4 September 1985, & JP-A-60 076005 (MATSUSHITA DENKI SANGYO KK) 30 April 1985,

## Description

This invention relates to a digital signal recording apparatus for recording an input signal on a recording medium in the form of pulse train recording.

### Description of the Prior Art

Up to now, various signal recording apparatus for recording signals on a recording medium by a rotating magnetic head have been investigated and put into practice. In video tape recorders (VTRs), for example, signals are recorded obliquely on a magnetic tape by plural recording magnetic heads provided at predetermined positions on a rotational drum.

When an editing is necessary to perform in this type of signal recording apparatus, an erasure magnetic head is provided to a rotary drum at a position preceding the recording magnetic head for accurately tracing the recording track and signal re-recording is performed by the recording magnetic head after flying erasure previously performed by the erasure magnetic head for a period corresponding to the re-recording period. Also, in a digital VTR for digital recording of video signals, the flying erasure is occasionally performed for satisfactory signal re-recording during the editing. However, in this type of signal recording apparatus, a separate erasure control circuit for supplying the electrical circuit to the erasure magnetic head in timing with the re-recording period and a rotary transformer for transmitting control signals have to be provided with the recording system. In addition, the power consumption is increased.

In the currently practised digital VTRs, as shown for example in the Japanese Unexamined Patent Publication No. 36312/1984 which corresponds to the pre-characterising part of claim 1, the recording magnetic head and the erasure magnetic head are provided in proximity to each other and control means for commonly controlling the operational timing of each of these magnetic heads is realized by a circuit of a simplified structure with a high power efficiency for overcoming the above described inconveniences.

In the signal recording apparatus needing an editing operation, an erasure magnetic head is provided to the rotary drum and the recording track is erased by flying erasure by the erasure magnetic head to effect satisfactory signal recording during editing. However, in case a flying erasure is performed, not only a separate erasure control circuit for supplying the current to the erasure magnetic head in timing with the re-recording period, but a rotary transformer for transmitting the erasure control signals, are necessitated, while the power consumption is increased.

In the digital VTRs shown in the above publication, distortions proper to magnetic recording, such as peak shifts, are produced as a result of the non-return to zero (NZR) recording, so that a circuit is necessitated to compensate for the distortions. Moreover, an adjustment operation is necessitated at five to six points for each channel for affording a circuit constant for the compensation circuit.

It is an object of the present invention to provide a digital signal recording apparatus that is able to perform satisfactory signal recording.

It is another object of the present invention to provide a digital signal recording apparatus wherein the complex timing circuitry or a rotary transformer for transmitting control signals may be dispensed with.

It is a further object of the present invention to provide a digital signal recording apparatus wherein the erasure magnetic head is driven by a current during the reference level period of pulse train recording and wherein pulse train recording and flying erasure may be performed by the electric power which is about the same as the power consumption involved in the conventional NRZ recording.

It is a further object of the present invention to provide a digital signal recording apparatus wehrein the power consumption may be reduced.

It is a further object of the present invention to provide a signal recording apparatus which has a smaller number of adjustment points and in which the compensating circuits for phase distortions such as the peak shifts may be dispensed with by pulse train recording.

It is a further object of the present invention to provide a digital signal recording apparatus in which the a.c. erasure current may be formed from the current of the reference level period by a simplified circuit.

It is yet another object of the present invention to provide a digital signal recording apparatus in which an erasure magnetic head is provided in one piece with a magnetic head adapted for performing pulse train recording and is adapted for performing flying erasure of the recording track formed by the recording magnetic head prior to re-recording, and in which an erasure current is supplied to the erasure magnetic head during the reference level period of the pulse train recording under control of the erasure control means.

According to the present invention, there is provided a digital signal recording apparatus for recording an input digital signal on a recording medium in the form of pulse train recording in which a recording current takes a first level or a second level in response to said input digital signal to be recorded, said apparatus comprising:
an input digital signal source for generating said input digital signal;
rotary drum means;
recording head means mounted on said rotary drum means and adapted for recording said input digital signal on said recording medium;
erasing head means mounted on said rotary drum means, located adjacent to said recording head means and adapted for erasing a recorded signal, the erasing head means preceding the recording head means according to the rotation of the rotary drum means;
a clock generator for generating a clock signal, characterised in that said apparatus further comprises :
means (40) for applying to said recording head a recording current taking, in response to the input digital signal, one of said first and second levels during the first half period of one clock period of the clock signal, the recording current taking said first level or said second level being followed by a reference level intermediate the first and second levels during the second half period of said one clock period; and
control means for controlling said erasing head means during the second half period of said one clock period such that said erasing head means erases the recorded signal before the recording operation, said control means including current source means for supplying a current to said erasing head means during said second half of said one clock period.

The inveniton will be further described by way of non-limitative example with reference to the accompanying drawings, in which:

Fig. 1 is a circuit diagram showing an embodiment of a digital signal recording device according to the present invention.

Fig. 2 is a block diagram showing the arrangement of an erasure/recording system in the digital signal recording device shown in Fig. 1.

Fig. 3 is a waveform diagram for illustrating the operation of the digital signal recording device shown in Fig. 1.

Fig. 4 is a diagram for illustrating the characteristics of the digital signal recording device shown in Fig. 1.

By referring to the accompanying drawings, a preferred embodiment of the present invention will be explained hereinbelow in more detail.

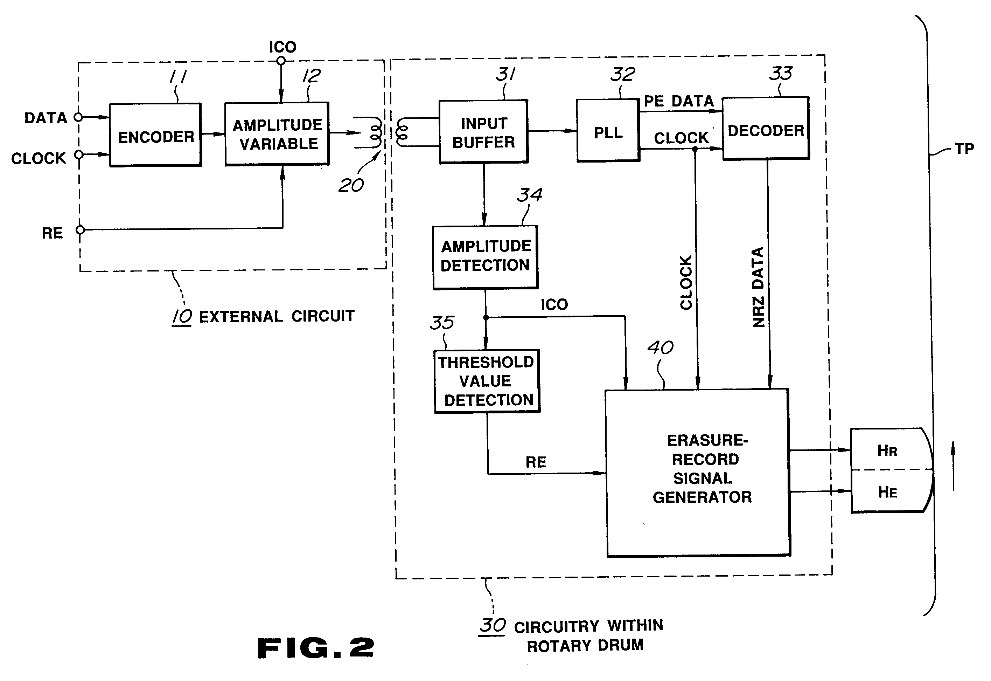

Fig. 2 is a block diagram showing the general arrangement of an erasure/recording system for an erasure magnetic head H_{E} and a recording magnetic head H_{R} for one channel of a digital VTR to which the present invention is applied.

In this digital VTR, the erasure magnetic head H_{E} and the recording magnetic head H_{R} are provided integrally with a predetermined distance therebetween which is short enough not to affect these heads H_{E} or H_{R} or a magnetic tape TP. These magnetic heads H_{E} and H_{R} are mounted at predetermined positions on the outer periphery of a rotary drum, not shown, so as to be both rotated in physical contact with the magnetic tape TP, and are adapted to erase the recording track formed by the recording magnetic head H_{R} by the erasure head H_{E} preceding the recording magnetic head H_{R}. This integral type erasure/recording magnetic head may be produced by bonding the heads H_{E} and H_{R} to each other or by providing a central magnetic body between the heads H_{E} and H_{R}.

Within the interior of the rotary drum, fitted with these magnetic heads H_{E} and H_{R}, there is provided an internal circuit 30 which is electrically connected with an external circuit 10 via a rotary transformer 20.

The external circuit 10 is provided with an encoder 11 supplied with clocks CLOCK of a predetermined period and recording data DATA from a signal generator, not shown, of a preceding stage, and an amplitude variable circuit 12 supplied with a recording current control signal ICO and a record operation command signal or record enable signal R_{E} from a system controller, not shown. The encoder 11 phase encodes the recording data DATA based on the clocks CLOCK to modulate the data into data having the waveform suited for transmission by the rotary transformer 20. The amplitude variable circuit 12 converts the signals supplied from the encoder 11 into signals having the amplitude corresponding to the record current control signal ICO and supplies these signals to the rotary transformer 20 when the record operation is commanded by the record enable signal R_{E}.

The signals supplied to this rotary transformer 20 are transmitted to the internal circuit 30 in which it is supplied via an input buffer circuit 31 to a phase locked loop (PLL) circuit 32 and an amplitude detector 34. The PLL circuit 32 takes out phase encoding or PE record data and clocks CLOCK from the output signals of the input buffer circuit 31 to supply these data and clocks to a decoder 33. The decoder 33 converts the PE record data into non-return to zero or NRZ record data, based on the aforementioned clocks CLOCK. The amplitude detector 34 also generates the record current control signals ICO in accordance with the amplitude of the output signals from the buffer circuit 31 to supply these control signals to a threshold value detector 35. The detector 35 generates the record enable signal RE from the threshold value of the record current control signal ICO. The clocks CLOCK, NRZ record data, record current control signals ICO and the record enable signals RE, outputted respectively from the PLL circuit 32, decoder 33, amplitude detector 34 and the threshold value detector 35, are supplied to an erasure/recording signal generator 40. The current for driving the circuitry in the interior circuit 30 of the rotary drum 30 and the magnetic heads H_{E} and H_{R} is supplied from the slip ring of a power rotary transformer, not shown. The internal circuit 30 can be formed without using the PLL circuit 32 if the clock CLOCK and the record data are adapted to be transmitted by separate rotary transformers.

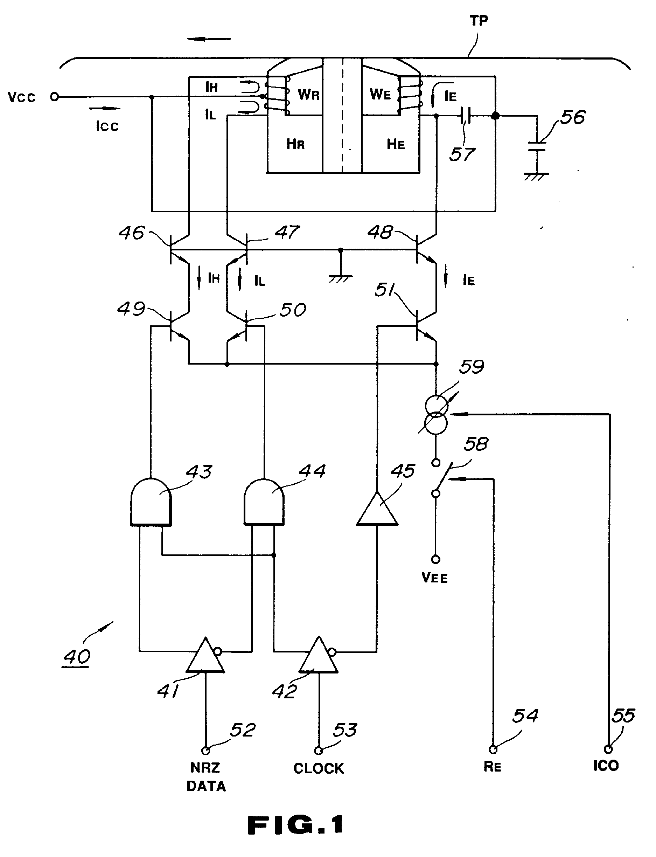

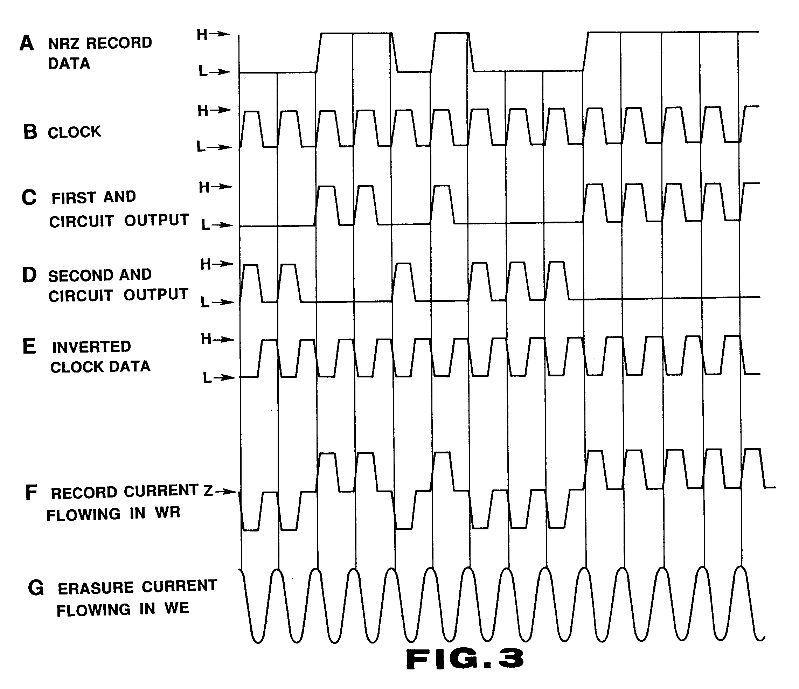

As shown in Fig. 1, the erasure/recording signal generator 40 is generally composed of a logic circuit formed by an emitter coupled logic or ECL performing an operation represented by two buffers 41, 42 each having an inverting output terminal, two AND circuits 43, 44 and a buffer 45, and three serially connected pairs of NPN transistors 45, 47; 48, 49; 50, 51. The NZR record data going to a high level or H level with the data "1" and to a low level or L level with the data "0" as shown at A in Fig. 3 are supplied to a data input terminal 52. The clocks CLOCK having one data length of the above described NRZ recording data as one period are also supplied to a clock input terminal 53, as shown at B in Fig. 3.

In the above described erasure/recording signal generator 40, the NRZ recording data are supplied via the buffer 41 so that the non-inverted data thereof are supplied to the AND circuit 43 while the inverted data thereof are supplied to the AND circuit 44. The clocks CLOCK supplied to the clock input terminal 53 are supplied via the buffer 42 so that the non-inverted data thereof are supplied to each of the logic elements 43, 44. These AND circuits 43, 44 form the logical product data from the NRZ record data and the clocks CLOCK supplied to their input terminals, as shown at C or D in Fig. 3 and supply the logical product data to the base of the transistors 49, 50. From the inverting output terminal of the buffer 42, the inverted data of the clocks CLOCK as shown at E in Fig. 3 are outputted and supplied to the base of the transistor 51 via buffer 45 at the same timing as the output data of the AND circuits 43, 44.

The coil W_{R} of the recording magnetic head H_{R} has its one end connected via transistor 46 to the collector of the transistor 49, while having its other end connected via transistor 47 to the collector of transistor 50 and its neutral point to a positive voltage terminal Vcc of, for example, +10 V. The coil W_{E} of the erasure magnetic head H_{E} has its one end connected to the positive voltage terminal Vcc and grounded via a decoupling capacitor 56, while having its other end connected to the collector of the transistor 51 via transistor 48. The coil W_{E} of the erasure magnetic head H_{E} has its both ends connected via capacitor 57. The base of the transistors 46, 47 and 48 are connected in common. Each of the transistors 49, 50 and 51 has its emitter connected in common to a record current source 59 which in turn has its current value controlled in accordance with the record current control signal ICO supplied via the record current control signal input terminal 55. To this recording current source 59 is connected a negative voltage terminal V_{EE} of, for example, -5V, via a switching circuit 58. This switching circuit is closed when a record operation is commanded by the above record operation command signal or record enable signal R_{E} supplied to the switching circuit via record operation command signal input terminal 54. Thus an electric current controlled to an optimum value in accordance with the above record current control signal ICO flows from the emitters of the transistors 49, 50 and 51.

In the above arrangement, transistor 49 is turned on when the output data from the AND circuit 43 as shown at C in Fig. 3 is "H", that is, during the period when the above NRZ record data is "1" and the clock is "H". On the other hand, transistor 50 is turned on when the output data of the AND circuit 44 supplied to the base of transistor 50 as shown at D in Fig. 3 is "H", that is, during the period when the above NZR record data is "0" and the above clock is "H", while transistor 51 is turned on when the inverted data of the clock CLOCK supplied to the base of transistor 51 as shown at E in Fig. 3 is "H", that is, when the above clock is "L".

When the transistor 49 is turned on during the above described period in the course of the recording operation, the current shown by an arrow mark Icc in Fig. 1 flows from the positive voltage terminal Vcc via one side of the coil W_{R} of the recording magnetic heard H_{R} and transistors 46, 49 to the recording current source 59, as shown by an arrow mark I_{H} in Fig. 1. On the other hand, when the transistor 50 is turned on during the above period in the course of the recording operation, the current flows via the other side of the coil W_{R} of the recording magnetic head H_{R} and transistors 47, 50 to the recording current source 59, as indicated by an arrow mark I_{L} in Fig. 1. In this manner, the recording current as shown at F in Fig. 3 is generated and flows in the coil W_{R} in such a manner that the current flows in a direction associated with the state of "H" or "L" of the NRZ recording data during the "H" period of the clock CLOCK, while the current is at the zero reference level "Z" during the "L" period of the clock CLOCK. A pulse train recording is achieved on the magnetic tape TP by a magnetic field produced in the recording magnetic head H_{R} by this recording current.

During the period when the above recording current is at the reference level "Z" in the course of the recording operation, that is, when the above clock CLOCK is "L", transistor 51 is turned on, as described above, so that the current shown by an arrow mark Icc flows via coil W_{E} of the erasure magnetic head H_{E} and transistors 48, 51 to the recording current source 59, as shown by an arrow mark I_{E} in Fig. 1. Thus an a.c. erasure current having a period equal to one clock period as shown at G in Fig. 3 is produced in the coil W_{E}, which a.c. erasure current is formed by a parallel resonance circuit constituted by the coil W_{E} and the capacitor 57. By the a.c. magnetic field produced in the erasure magnetic head H_{E}, the magnetic tape TP is subjected to an a.c. erasure prior to the above described pulse train recording. This a.c. erasure generally exhibits an erasure performance better than that of the d.c. erasure achieved by the d.c. magnetic field. This a.c. erasure, however, has not been in popular use because of the complexity and bulky size of the erasure circuit and the excessive power consmption. In the present embodiment, an a.c. erasure is performed by an a.c. erasure current which is formed by the above parallel resonance circuit from the recording current supplied at each period of the reference level "Z", so that the pulse train recording and the a.c. erasure may be realized with the power consumption about equal to that in the case of the conventional NZR recording and without employing complicated circuits.

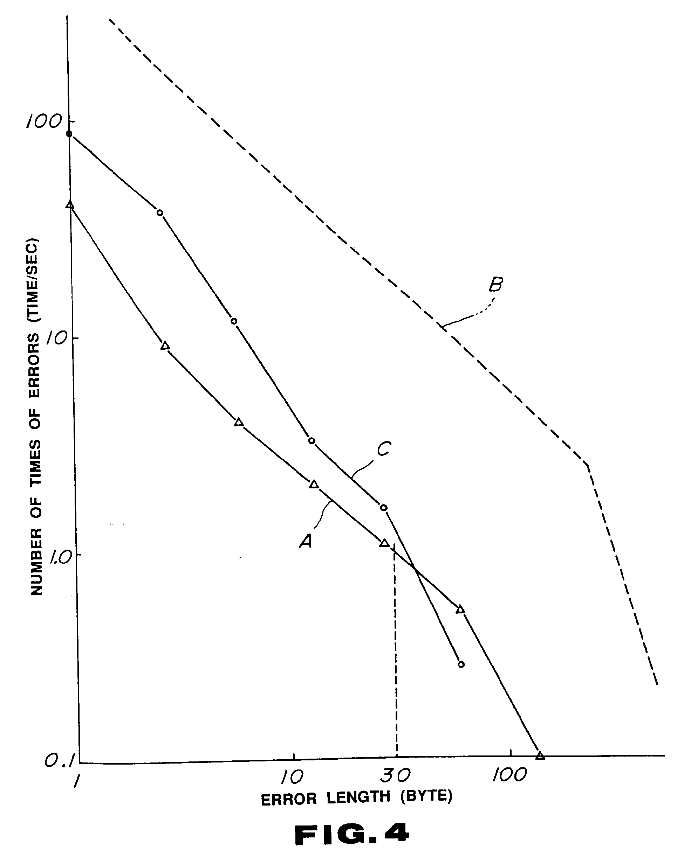

Fig. 4 statistically shows the status of the errors produced in the data recorded and reproduced in the 4:2:2 digital VTR provided with four channels of the above described erasure and recording system. In this figure, the ordinate denotes the number of times of errors in second and the abscissa the error length. The number of errors caused in the data obtained by a.c. erasure followed by pulse train recording by a digital VTR to which the present invention is applied, as shown by a solid line A, is significantly smaller than that of errors in the case of a SMPTE model as shown by a broken line B. Even when compared with the case of the errors caused in the data obtained by the conventional d.c. erasure followed by NRZ recording, as indicated by the solid line C, the number of times of errors shorter than 30 bytes, which represent the major portion of the errors, is reduced to about one half or one fourth.

In the above described erasure/recording signal generator 40, the transistors 49, 50 and 51 are turned on alternately, so that the current shown by the arrow I_{H}, I_{L} or I_{E} is supplied from one of these transistors to the above recording current source 59. These currents are supplied via transistors 46, 47 and 48 to the transistors 49, 50 and 51, so that, even when the currents of a larger amplitude are supplied to the collectors of the transistors 46, 47 and 48 during different periods, the effects on the transistors 49, 50 and 51 may be reduced.

In the above described embodiment, the recording tracks formed by the recording magnetic head H_{R} are subjected to rotational erasure by an a.c. magnetic field prior to pulse train recording by the erasure magnetic head H_{E} provided integrally with the recording magnetic head H_{R}. Thus the recording data may be recorded on the magnetic tape TP with a good S/N ratio not only during the ordinary recording but also during editing, so that the errors at the time of the reproduction may be reduced significantly. The erasure magnetic head H_{E} is disposed at a sufficiently short distance from the recording magnetic head H_{R} and the erasure current is adapted to flow in the coil W_{E} during the time when the recording magnetic head H_{R} is performing the recording operation, so that the complex circuitry for timing or a rotary transformer for control signal transmission may be dispensed with. In addition, the recording current during the reference level period of the pulse train recording is used as the erasure current supplied to the erasure magnetic head H_{E}, so that the recording current source 59 provided for driving the recording magnetic head H_{R} may be used simultaneously as the current source for the recording current. The pulse train recording and the a.c. erasure may be achieved with the power consumption about equal to that in the case of the conventional NRZ recording which is not the pulse train recording. With the pulse train recording, phase distortions such as peak shifts caused in the conventional NRZ recording may be reduced and the compensation circuits therefore may be dispensed with. The result is that the adjustment point is solely the record current value by the record current control signal ICO so that the adjustment operation is facilitated.

## Claims

1. A digital signal recording apparatus for recording an input digital signal on a recording medium in the form of pulse train recording in which a recording current takes a first level or a second level in response to said input digital signal to be recorded, said apparatus comprising:
an input digital signal (10) source for generating said input digital signal;
rotary drum means;
recording head means (HR,WR) mounted on said rotary drum means and adapted for recording said input digital signal on said recording medium;
erasing head means (HE,WE) mounted on said rotary drums means, located adjacent to said recording head means (HR, WR) and adapted for erasing a recorded signal, the erasing head means (HE,WE) preceding the recording head means (HR,WR) according to the rotation of the rotary drum means;
a clock generator for generating a clock signal, characterised in that said apparatus further comprises :
means (40) for applying to said recording head a recording current taking, in response to the input digital signal, one of said first and second levels during the first half period of one clock period of the clock signal, the recording current taking said first level or said second level being followed by a reference level intermediate the first and second levels during the second half period of said one clock period; and
control means for controlling said erasing head means during the second half period of said one clock period such that said erasing head means erases the recorded signal before the recording operation, said control means including current source means (59) for supplying a current to said erasing head means (HE,WE) during said second half of said one clock period.

2. A digital signal recording apparatus according to claim 1, wherein said erasing head means includes a resonant circuit, whereby the erasing current flowing through said erasing head means (HE,WE) is a sinusoidal wave form current having the same frequency as that of the clock signal.

3. A digital signal recording apparatus according to claim 2, wherein said resonant circuit includes a coil (WE) of said erasing head means and a capacitor (56).

4. A digital signal recording apparatus according to claim 3, wherein said current source means includes erasing transistor means (51,48) controlled by said clock signal having a substantially 50% duty cycle.

5. A digital signal recording apparatus according to claim 4, wherein said means for applying a recording current includes first and second transistor means (49,46,47,50) connected in differential fashion, said first transistor means (49,46) is controlled by a first signal corresponding to a first level of said input digital signal and wherein said second transistor means (50,47) is controlled by a second signal corresponding to a second level of said input digital signal.

6. A digital signal recording apparatus according to claim 5, wherein said first and second signals are generated during said first half of said one clock period.

7. A digital signal recording apparatus according to claim 6, wherein said means for applying a recording current further includes buffer means (41) supplied with said input digital signal and generating inverted and non-inverted output signals, first AND gate means (43) supplied with said non-inverted output signal and said clock signal said first AND gate means generating said first signal, and second AND gate means (44) supplied with said inverted output signal and said clock signal, said second AND gate means generating said second signal.

8. A digital signal recording apparatus according to claim 7, wherein each of said first, second and erasing transistor means (49,46,50,57,51,48) includes a common emitter transistor and a common base transistor connected in cascade fashion.

9. A digital signal recording apparatus according to any one of claims 1 to 8 wherein said means for applying a recording current and said control means are mounted in said rotary drum means.

10. A digital signal recording apparatus according to any one of claims 1 to 9 wherein said recording head means and said erasing head means are formed in one piece.

## Patentansprüche

1. Aufzeichnungsvorrichtung für digitale Signale zur Aufzeichnung eines digitalen Eingangssignals auf ein Aufzeichnungsmedium in Form einer Impulszugaufzeichnung, bei welcher ein Aufzeichnungsstrom einen ersten Pegel oder einen zweiten Pegel als Reaktion auf das aufzuzeichnende digitale Eingangssignal einnimmt, wobei die Vorrichtung umfaßt:
eine Eingangssignalquelle (10) zur Erzeugung des digitalen Eingangssignals;
eine rotierende Trommeleinrichtung;
eine Aufzeichnungskopfeinrichtung (HR, WR), die auf der rotierenden Trommeleinrichtung montiert ist und zur Aufzeichnung des digitalen Eingangssignals auf das Aufzeichnungsmedium geeignet ist;
eine Löschkopfeinrichtung (HE, WE), die angrenzend an die Aufzeichnungskopfeinrichtung (HR, WR) auf der rotierenden Trommeleinrichtung montiert ist und zur Löschung eines aufgezeichneten Signals geeignet ist, wobei die Löschkopfeinrichtung (HE, WE) der Aufzeichnungskopfeinrichtung (HR, WR) entsprechend der Drehung vor der rotierenden Trommeleinrichtung liegt;
einen Taktgenerator zur Erzeugung eines Taktsignals, dadurch gekennzeichnet, daß die Vorrichtung weiterhin umfaßt:
Mittel (40) zum Anlegen eines Aufzeichnungsstroms, welcher als Reaktion auf das digitale Eingangssignal einen der ersten und zweiten Pegel während der ersten Halbperiode einer Taktperiode des Taktsignals einnimmt, an den Aufzeichnungskopf, wobei der Aufzeichnungsstrom den ersten Pegel oder den zweiten Pegel einnimmt, dem ein zwischen den ersten und zweiten Pegeln liegender Referenzpegel während der zweiten Halbperiode der einen Taktperiode folgt;
Steuermittel zur Steuerung der Löschkopfeinrichtung während der zweiten Halbperiode der einen Taktperiode derart, daß die Löschkopfeinrichtung das aufgezeichnete Signal vor dem Aufzeichnungsvorgang löscht, wobei die Steuermittel eine Stromquelleneinrichtung (59) zur Bereitstellung eines Stroms für die Löschkopfeinrichtung (HE, WE) während der zweiten Hälfte der einen Taktperiode enthalten.

2. Aufzeichnungsvorrichtung für digitale Signale nach Anspruch 1, bei welcher die Löschkopfeinrichtung einen Resonanzkreis enthält, wodurch der durch die Löschkopfeinrichtung (HE, WE) fließende Löschstrom ein Strom mit einer sinusförmigen Wellenform wird, welcher die gleiche Frequenz wie jene des Taktsignals besitzt.

3. Aufzeichnungsvorrichtung für digitale Signale nach Anspruch 2, bei welcher der Resonanzkreis eine Spule (WE) der Löschkopfeinrichtung und einen Kondensator (56) enthält.

4. Aufzeichnungsvorrichtung für digitale Signale nach Anspruch 3, bei welcher die Stromquelleneinrichtung eine Löschtransistoreinrichtung (51, 48) enthält, die durch das Taktsignal gesteuert wird, das im wesentlichen ein Tastverhältnis von 50% besitzt.

5. Aufzeichnungsvorrichtung für digitale Signale nach Anspruch 4, bei welcher Mittel zum Anlegen eines Aufzeichnungsstroms erste und zweite Transistoreinrichtungen (49, 46, 47, 50), die in differentieller Weise verbunden sind, enthalten, wobei die erste Transistoreinrichtung (49, 46) durch ein erstes Signal gesteuert wird, welches einem ersten Pegel des digitalen Eingangssignals entspricht, und bei der die zweite Transistoreinrichtung (50, 47) durch ein zweites Signal gesteuert wird, welches einem zweiten Pegel des digitalen Eingangssignal entspricht.

6. Aufzeichnungsvorrichtung für digitale Signale nach Anspruch 5, bei der die ersten und zweiten Signale während der ersten Hälfte der Taktperiode erzeugt werden.

7. Aufzeichnungsvorrichtung für digitale Signale nach Anspruch 6, bei welcher die Mittel zum Anlegen eines Aufzeichnungsstroms weiterhin eine Pufferspeichereinrichtung (41) enthalten, welcher die digitalen Eingangssignale zugeführt werden und welche invertierte und nicht invertierte Ausgangssignale erzeugt, wobei einer ersten Und-Gattereinrichtung (43) die nicht invertierten Ausgangssignale und die Taktsignale zugeführt werden, und die erste Und-Gattereinrichtung das erste Signal erzeugt, und wobei einer zweiten Und-Gattereinrichtung (44) das invertierte Ausgangssignal und das Taktsignal zugeführt wird, wobei die zweite Und-Gattereinrichtung das zweite Signal erzeugt.

8. Aufzeichnungsvorrichtung für digitale Signale nach Anspruch 7, bei welcher jede der ersten, zweiten und der Lösch-Transistoreinrichtungen (49, 46, 50, 57, 51, 48) einen gemeinsamen Emittertransistor und einen gemeinsamen in Art einer Kaskade verbundenen Basistransistor enthält.

9. Aufzeichnungsvorrichtung für digitale Signale nach einem der Ansprüche 1 bis 8, bei welcher die Mittel zum Anlegen eines Aufzeichnungsstroms und die Steuermittel auf der rotierenden Trommeleinrichtung montiert sind.

10. Aufzeichnungsvorrichtung für digitale Signale nach einem der Ansprüche 1 bis 9, bei welcher die Aufzeichnungskopfeinrichtung und die Löschkopfeinrichtung als ein Stück ausgebildet sind.

## Revendications

1. Appareil d'enregistrement de signaux numériques pour enregistrer un signal numérique d'entrée sur un support d'enregistrement sous la forme d'un enregistrement de train d'impulsions dans lequel un courant d'enregistrement prend un premier niveau ou un second niveau en réponse audit signal numérique d'entrée à enregistrer, ledit appareil comprenant :
une source (10) de signaux numériques d'entrée pour générer ledit signal numérique d'entrée ;
un dispositif de tambour tournant ;
un dispositif de têtes d'enregistrement (HR, WR) monté sur ledit dispositif de tambour tournant et adapté pour enregistrer ledit signal numérique d'entrée sur ledit support d'enregistrement ;
un dispositif de têtes d'effacement (HE, WE) monté sur ledit dispositif de tambour tournant, situé de façon adjacente audit dispositif de têtes d'enregistrement (HR, WR) et adapté pour effacer un signal enregistré, le dispositif de têtes d'effacement (HE, WE) précédent le dispositif de têtes d'enregistrement (HR, WR) selon la rotation du dispositif de tambour tournant ;
un générateur d'horloge pour générer un signal d'horloge, caractérisé en ce que ledit appareil comprend en outre :
un dispositif (40) pour appliquer à ladite tête d'enregistrement un courant d'enregistrement prenant, en réponse au signal numérique d'entrée, un desdits premier et second niveaux pendant la première moitié de période d'une période d'horloge du signal d'horloge, le courant d'enregistrement prenant ledit premier niveau ou ledit second niveau suivi par un niveau de référence intermédiaire entre les premier et second niveaux pendant la seconde moitié de période de ladite période d'horloge ; et
un dispositif de commande pour commander ledit dispositif de têtes d'effacement pendant la seconde moitié de période de ladite période d'horloge de sorte que ledit dispositif de têtes d'effacement efface le signal enregistré avant l'opération d'enregistrement, ledit dispositif de commande comprenant un dispositif de source de courant (59) pour fournir un courant audit dispositif de têtes d'effacement (HE, WE) pendant ladite seconde moitié de ladite période d'horloge.

2. Appareil d'enregistrement de signaux numériques selon la revendication 1, dans lequel ledit dispositif de têtes d'effacement comprend un circuit résonnant, grâce auquel le courant d'effacement passant via ledit dispositif de têtes d'effacement (HE, WE) est un courant de forme d'onde sinusoïdale ayant la même fréquence que celle du signal d'horloge.

3. Appareil d'enregistrement de signaux numériques selon la revendication 2, dans lequel ledit circuit résonnant comprend une bobine (WE) dudit dispositif de têtes d'effacement et un condensateur (56).

4. Appareil d'enregistrement de signaux numériques selon la revendication 3, dans lequel ledit dispositif de source de courant comprend un dispositif de transistors d'effacement (51, 48) commandé par ledit signal d'horloge ayant un cycle de charge essentiellement de 50 %.

5. Appareil d'enregistrement de signaux numériques selon la revendication 4, dans lequel ledit dispositif pour appliquer un courant d'enregistrement comprend des premier et second dispositifs de transistors (49, 46, 47, 50) reliés de façon différentielle, ledit premier dispositif de transistors (49, 46) est commandé par un premier signal correspondant à un premier niveau dudit signal numérique d'entrée et dans lequel ledit second dispositif de transistors (50, 47) est commandé par un second signal correspondant à un second niveau dudit signal numérique d'entrée.

6. Appareil d'enregistrement de signaux numériques selon le revendication 5, dans lequel les premier et second signaux sont générés pendant ladite première moitié de ladite période d'horloge.

7. Appareil d'enregistrement de signaux numériques selon la revendication 6, dans lequel ledit dispositif pour appliquer un courant d'enregistrement comprend en outre un dispositif de mémoire tampon (41) recevant ledit signal numérique d'entrée et pour générer des signaux de sortie inversés et non inversés, un premier dispositif de porte ET (43) recevant ledit signal de sortie non inversé et ledit signal d'horloge, ledit premier dispositif de porte ET générant ledit premier signal, et un second dispositif de porte ET (44) recevant ledit signal de sortie inversé et ledit signal d'horloge, ledit second dispositif de porte ET générant ledit second signal.

8. Appareil d'enregistrement de signaux numériques selon la revendication 7, dans lequel chacun desdits premier, second et dispositif d'effacement à transistors (49, 46, 50, 57, 51, 48) comprend un transistor monté en émetteur commun et un transistor monté en base commune reliés en cascade.

9. Appareil d'enregistrement de signaux numériques selon l'une quelconque des revendications 1 à 8 dans lequel ledit dispositif pour appliquer un courant d'enregistrement et ledit dispositif de commande sont montés dans ledit dispositif de tambour tournant.

10. Appareil d'enregistrement de signaux numériques selon l'une quelconque des revendications 1 à 9 dans lequel ledit dispositif de têtes d'enregistrement et ledit dispositif de têtes d'effacement sont formés en une seule pièce.
